Europäisches Patentamt

(19) European Patent Office

Office européen des brevets

(11) **EP 0 960 144 B1**

(12) **EUROPÄISCHE PATENTSCHRIFT**

(45) Veröffentlichungstag und Bekanntmachung des Hinweises auf die Patenterteilung:
**29.05.2002 Patentblatt 2002/22**

(51) Int Cl.[7]: **C08F 36/04**, C07F 17/00, C08F 4/64, C08F 4/76

(21) Anmeldenummer: **98910641.4**

(22) Anmeldetag: **10.02.1998**

(86) Internationale Anmeldenummer:
**PCT/EP98/00739**

(87) Internationale Veröffentlichungsnummer:
**WO 98/36004 (20.08.1998 Gazette 1998/33)**

(54) **NEUES KALALYSATORSYSTEM, DESSEN VERWENDUNG ZUR POLYMERISATION VON DIENEN IN LÖSUNG, SUSPENSION UND GASPHASE UND VERWENDUNG DER SOMIT HERSTELLBAREN DIENKAUTSCHUKE**

NOVEL CATALYST SYSTEM, THE USE THEREOF IN THE POLYMERIZATION OF DIENES IN A SOLUTION, SUSPENSION AND VAPOUR PHASE AND THE USE OF DIENE RUBBERS PRODUCED THEREWITH

NOUVEAU SYSTEME CATALYSEUR, SON UTILISATION POUR POLYMERISER DES DIENES EN SOLUTION, EN SUSPENSION OU EN PHASE GAZEUSE ET UTILISATION DES CAOUTCHOUCS DIENIQUES PRODUITS A L'AIDE DUDIT SYSTEME CATALYSEUR

(84) Benannte Vertragsstaaten:
**DE FR GB IT**

(30) Priorität: **17.02.1997 DE 19706027**
          **17.02.1997 DE 19706026**
          **17.02.1997 DE 19706025**

(43) Veröffentlichungstag der Anmeldung:
**01.12.1999 Patentblatt 1999/48**

(73) Patentinhaber: **Bayer Aktiengesellschaft
51368 Leverkusen (DE)**

(72) Erfinder:
• **DAUBEN, Michael
D-41468 Neuss (DE)**
• **ENGEHAUSEN, Rüdiger
D-41539 Dormagen (DE)**
• **GREVE, Heinz, Hermann
Brights Grove, Ontario N0N 1C0 (CA)**
• **NENTWIG, Wolfgang
D-51465 Bergisch Gladbach (DE)**
• **KAMINSKY, Walter
D-25421 Pinneberg (DE)**
• **STRÜBEL, Christian
D-22765 Hamburg (DE)**
• **SCHOLZ, Volker
D-21073 Hamburg (DE)**

(56) Entgegenhaltungen:
**EP-A- 0 283 739        WO-A-97/07141
DE-A- 4 332 009**

**Beschreibung**

Die vorliegende Erfindung betrifft ein neues Katalysatorsystem, dessen Verwendung zur Polymerisation von Dienen in Lösung, Suspension und Gasphase und Verwendung der somit herstellbaren Dienkautschuke mit hohem cis-Gehalt, mittlerem Vinyl-Gehalt und geringem Gel-Gehalt.

Die Herstellung von Polydienen, z.B. von cis-Polybutadien (BR) auf Basis von metallorganischen Ziegler-Natta-Katalysatoren ist ein seit langem großtechnisch genutztes Verfahren. Die handelsüblichen Typen zeichnen sich durch unterschiedliche Mikrostrukturen aus. Die hoch-cis-Typen weisen cis-Gehalte von über 90 % und vinyl-Gehalte von bis zu 4 % auf: Nd-BR (97 % cis, 2 % trans, 1 % vinyl), Ni-BR (96 % cis, 2 % trans, 2 % vinyl), Co-BR (95 % cis, 3 % trans, 2 % vinyl), Ti-BR (92 % cis, 4 % trans, 4 % vinyl) (Ullmanns Encyklopädie der technischen Chemie, Verlag Chemie, Weinheim, 4. Auflage, Band 13, Seite 602-604, "Handbuch für die Gummi-Industrie", Bayer AG, 2. Auflage, Kapitel A8.1).

Li-BR dagegen wird anionisch mit Hilfe von Lithiumalkyl-Katalysatoren hergestellt. Der trans-Gehalt übersteigt hier den cis-Gehalt (35 % cis, 55 % trans, 10 % vinyl).

Es ist weiterhin bekannt, daß sich hoch-cis-haltige Dienkautschuke mit Vinylgehalten >10 % unter Verwendung von metallorganischen Katalysatorsystemen insbesondere Metallocenen herstellen lassen, z.B. mit Cyclopentadienyltitantrichlorid ($CpTiCl_3$)/Methylaluminoxan (MAO) (L. Oliva, P. Longo, A. Grassi, P. Ammendola, C. Pellecchia, Makromol. Chem., Rapid Commun. 11(1990) 519-524) oder Cyclopentadienyltributoxytitan/MAO (G. Ricci, L. Porri, A. Giarrusso, Macromol. Symp. 89 (1995)383-392).

DE-A1-4332009 offenbart in den Beispielen ein Polymerisationsverfahren für $\alpha$-Olefine, wobei fluorhaltige $\Pi$-System-haltige Organometallfluorid-Katalysatoren eingesetzt werden.

EP-A2-0 283 739 offenbart Bis(di-, tri- oder tetrasubstituierte Cyclopentadienyl)-Zirkoniumhalide und ihre Verwendung zur Herstellung von Copolymeren aus $\alpha$-Olefin und Dienen.

WO-97/07141 A1 offenbart fluorhaltige $\Pi$-System-haltige Organometallfluorid-Katalysatoren und deren Verwendung zur Polymerisation von Vinyl-haltigen Monomeren, insbesondere Styrol.

Es ist auch bekannt, die Polymerisation von konjugierten Dienen ohne Zusatz von Lösungsmitteln in den flüssigen Monomeren durchzuführen. Ein solches Verfahren hat jedoch den Nachteil, daß bei der vollständigen Polymerisation eine große Wärmemenge frei wird, die schwer zu regulieren ist und deshalb ein gewisses Gefahrenpotential darstellt. Außerdem treten auch hier bei der Abtrennung der Polymeren von den Monomeren Belastungen für die Umwelt auf.

In den letzten Jahren hat sich zur Herstellung insbesondere von Polyethylenen und Polypropylenen das Gasphasenverfahren als besonders vorteilhaft erwiesen und technisch durchgesetzt. Die umweltrelevanten Vorteile des Gasphasenverfahrens beruhen insbesondere darauf, daß keine Lösungsmittel eingesetzt werden und Emissionen und Abwasserbelastungen verringert werden können.

Ein Katalysatorsystem, das in der Gasphase Butadien zu Polybutadien mit sehr hohen cis-Anteilen polymerisiert, ist nach EP 647 657 bekannt. Es ist weiterhin bekannt, daß ein System aus $CpTiCl_3$ und MAO in der Lage ist, Butadien ohne Lösungsmittel zu polymerisieren (WO 96/04322).

Die Hauptanwendungsgebiete für Polybutadien liegen auf den Gebieten der Reifenproduktion, den technischen Gummiwaren und der Modifizierung von Kunststoffen.

Bei der Reifenfertigung werden bekanntermaßen die verschiedenen Bauteile wie Lauffläche, Seitenwand, Stahlgürtellagen, Karkasse, Wulst zum Rohling zusammengesetzt und anschließend vulkanisiert. Bei der Reifenproduktion wirkt sich deshalb ein hoher cis -Gehalt aufgrund der Mischungsklebrigkeit und Rohfestigkeit positiv aus ("Kunststoffe und Elastomere in Kraftfahrzeugen, G. Walter, Verlag W. Kohlhammer Stuttgart, Berlin, Köln, Mainz, 1985, Kapitel 4.7.17; "Handbuch für die Gummilndustrie", Bayer AG, 2. Auflage, Kapitel A8.1).

Andererseits ist bekannt, daß eine Erhöhung des Vinylgehalts bestimmte Eigenschaften des Reifens, speziell die Nassrutschfestigkeit, verbessert. Durch die Verbesserung der Nassrutschfestigkeit wird eine höhere Fahrsicherheit gewährleistet.

Bei gängigen Laufflächenmischungen nimmt bei verbesserter Nassrutschfestigkeit jedoch der Rollwiderstand ab und damit der Kraftstoffverbrauch und die Emissionen der Kraftfahrzeuge zu. Es hat sich erwiesen, daß der Rollwiderstand sich gut mit dem Verlustfaktor tan $\delta$ korrelieren läßt, der bei einer Frequenz von 10 Hz und einer Temperatur von $60^\circ C$ aufgenommen wird. Dabei geht eine Erniedrigung des Verlustfaktors bei $60^\circ C$ mit einer Senkung des Rollwiderstands einher (K. H. Nordsiek, Kautschuk, Gummi, Kunststoffe 39 (1986) 599-611; R. Bond, G. F. Morton, L. H. Krol, Polymer 25 (1984) 132-140).

Es ist bekannt, daß Reifeneigenschaften durch Mischung verschiedenartiger synthetischer Kautschukarten eingestellt werden können. Dieser Vorgang ist jedoch aufwendig und es kann dabei das Problem aufteten, daß es bei Mischungen zu Phasentrennung kommen kann.

Die Aufgabe besteht darin, ein neues Katalysatorsystem zur Herstellung von Dienkautschuken mit hohen cis-, mittleren Vinyl- und niedrigen Gelgehalten, die in Kautschukmischungen einen niedrigeren Verlustfaktor tan $\delta$ bei

60°C (Rollwiderstand) aufweisen, in Lösungs-, Suspensions- und Gasphasenverfahren bereitzustellen, das die Nachteile des Standes der Technik nicht aufweist.

Überraschend wurde nun gefunden, daß man Dien-Kautschuke in hohen Raum-Zeit-Ausbeuten herstellen kann, wenn man eine fluorhaltige metallorganische Verbindung zusammen mit einem Cokatalysator einsetzt, und daß man Dien-Kautschuke mit niedrigen Gelgehalten in hohen Raum-Zeit-Ausbeuten herstellen kann, wenn man eine fluorhaltige metallorganische Verbindung zusammen mit einem Cokatalysator auf einem anorganischen Träger heterogenisiert und in der Gasphasenpolymerisation einsetzt.

Weiterhin wurde nun gefunden, daß man Dien-Kautschuke in hohen Raum-Zeit-Ausbeuten Prozeß mittels metallorganischer Katalysatoren in einem einstufigen Prozeß herstellen kann, die einen hohen cis-Gehalt und mittleren Vinyl-Gehalt aufweisen und in Kautschukmischungen einen niedrigeren Verlustfaktor tan δ bei 60°C sowie hohe Elastizität zeigen und die sich somit hervorragend als Rohstoffe im Reifenbereich für Laufflächen- und Seitenwandanwendungen eignen.

Die gestellte Aufgabe wird erfindungsgemäß gelöst durch ein Verfahren zur Herstellung von Dienkautschuken mit einem Vinylgehalt im Bereich von 5 bis 50 % und einem cis-Anteil von über 50 % durch Polymerisation von monomeren Dienverbindungen in Lösung, Suspension oder in der Gasphase dadurch gekennzeichnet, dass in Gegenwart eines Katalysatorsystems gemäß der allgemeinen Formel (1)

$$R_nMX_m \tag{1},$$

worin M ein Metall ist,
R gleich oder verschieden ist, verbrückt oder unverbrückt vorliegen kann und einen ein- oder mehrkernigen Kohlenwasserstoffrest, welcher mit dem Zentralatom M koordiniert ist, bedeutet,
X gleich oder verschieden ist und mindestens ein Fluoratom sowie ein Wasserstoffrest, $C_1$- bis $C_{10}$-Alkyl, $C_6$- bis $C_{15}$-Aryl oder OR' oder OC(O)R' bedeutet, wobei R' für $C_1$- bis $C_{10}$-Alkyl, $C_6$- bis $C_{15}$-Aryl, Alkylaryl, Fluor, Fluoralkyl oder Fluoraryl mit jeweils 1 bis 10 C-Atomen im Alkylrest und 6 bis 20 C-Atomen im Arylrest steht,
n 1 oder 2 ist,
m 1,2 oder 3 bedeutet,
wobei n+m 3 oder 4 ist,
sowie eines Cokatalysators durchgeführt wird,
wobei die Verbindung der Formel 1 gegebenenfalls auf einen anorganischen oder organischen Träger aufgebracht und heterogenisiert eingesetzt wird.

Bevorzugt ist M gleich Titan, Zirkonium, Hafnium, Vanadium, Niob, Tantal, Scandium, Yttrium oder ein Selterdenmetall, besonders bevorzugt Titan.

X ist bevorzugt Fluor oder eine Mischung aus Fluor sowie Chlor, Brom oder Jod.

n ist 1 oder 2, m ist 3, 2 oder 1, m+n ist 3 oder 4.

n ist bevorzugt 1, m ist bevorzugt 3, m+n ist bevorzugt 4.

R ist bevorzugt eine substituierte oder unsubstituierte Cyclopentadienylgruppe $(R'')_kCp$, wobei R'' ein Wasserstoffrest, $C_1$- bis $C_{10}$-Alkyl, $C_6$- bis $C_{15}$-Aryl, Arylalkyl, Alkenyl, Fluoralkyl, Fluoraryl bedeutet, und k 1-5 bedeutet.

Beispiele für substituierte Cyclopentadienylgruppen sind Methylcyclopentadienyl, Dimethylcyclopentadienyl, Trimethylcyclopentadienyl, Pentamethylcyclopentadienyl, Ethylcyclopentadienyl, Diethylcyclopentadienyl, Triethylcyclopentadienyl, Tetraethylcyclopentadienyl, Pentaethylcyclopentadienyl, Propylcyclopentadienyl, Phenylcyclopentadienyl, Ethyltetramethylcyclopentadienyl, Propyltetramethylcyclopentadienyl, Butyltetramethylcyclopentadienyl, Silylcyclopentadienyl, Indenyl, Methylindenyl, Dimethylindenyl, Benzindenyl, Methylbenzindenyl, Dimethylbenzindenyl, Trimethylbenzindenyl.

Beispiele für besonders bevorzugte Verbindungen der Formel 1 sind:

$CpTiF_3$
$MeCpTiF_3$
$Me_5CpTiF_3$
$(Me_5Cp)_2TiF$
$IndTiF_3$
$IndTiClF_2$
$IndTiCl_2F$
$MeIndTiF_3$
$MeIndTiClF_2$
$MeIndTiCl_2F$

$Me_2IndTiF_3$

$BenzindTiF_3$

$MeBenzindTiF_3$

Als Cokatalysator können in das erfindungsgemäße Verfahren Alkylaluminoxane, butyl-modifizierte Aluminoxane, Aluminiumalkyle, oder fluorsubstituierte Triarylborane oder Mischungen der Komponenten eingesetzt werden. Bevorzugt ist Methylaluminoxan und butyl-modifiziertes Methylaluminoxan (sog. Co-Methyaluminoxan).

Als Diene können in das erfindungsgemäße Verfahren Butadien, Isopren, Pentadien und 2,3- Dimethylbutadien eingesetzt werden, insbesondere Butadien und Isopren. Die genannten Diene können sowohl einzeln als auch im Gemisch untereinander eingesetzt werden, so daß entweder Homopolymerisate oder Copolymerisate der genannten Diene entstehen.

Die erfindungsmäßige Polymerisation wird bevorzugt in Gegenwart von inerten, organischen Lösungsmitteln durchgeführt. Als inerte, organische Lösungsmittel kommen beispielsweise in Frage: Aromatische, aliphatische und/oder cycloaliphatische Kohlenwasserstoffe, wie bevorzugt Benzol, Toluol, Hexan, Pentan, Heptan und/oder Cyclohexan. Die Polymerisation wird bevorzugt als Lösungspolymerisation oder in Suspension betrieben.

In einer weiteren bevorzugten Ausführungsform wird das erfindungsmäßige Verfahren in der Gasphase durchgeführt. Die Polymerisation von Olefinen in der Gasphase wurde technologisch erstmals im Jahre 1962 realisiert (US 3,023,203). Entsprechende Fließbettreaktoren sind seit langem Stand der Technik.

Die metallorganische Verbindung der Formel 1 und der Cokatalysator werden bevorzugt auf einen anorganischen Träger aufgebracht und heterogenisiert eingesetzt. Als inerte anorganische Feststoffe eignen sich insbesondere Silicagele, Tone, Alumosilicate, Talkum, Zeolithe, Ruß, anorganische Oxide, wie Siliciumdioxid, Aluminiumoxid, Magnesiumoxid, Titandioxid, Siliciumcarbid, bevorzugt Silicagele, Zeolithe und Ruß. Die genannten inerten, anorganischen Feststoffe können einzeln oder im Gemisch untereinander eingesetzt werden. In einer weiteren bevorzugten Ausführungsform werden organische Träger einzeln oder im Gemisch untereinander oder mit anorganischen Trägern eingesetzt werden. Beispiele für organische Träger sind poröses Polystyrol, poröses Polypropylen oder poröses Polyethylen.

Die erfindungsmäßige Polymerisation kann in einem Temperaturbereich von -90°C bis 180°C, bevorzugt in einem Temperaturbereich von 50°C bis 150°C durchgeführt werden.

Weitere bevorzugte Ausführungsformen sind den Ansprüchen zu entnehmen.

Die vorliegende Erfindung betrifft auch die Verwendung der erfindungsgemäß herstellbaren Dienkautschuken bevorzugt zur Herstellung von Reifen.

Der Vinylgehalt der Dienkautschuke liegt in einem Bereich von 5 bis 50 %, bevorzugt in einem Bereich von 10 bis 30 %. Der cis-Anteil der erfindungsgemäß herstellbaren Dienkautschuke liegt über 50 %, bevorzugt über 70 %, wobei in allen Fällen möglichst niedrige Gelgehalte angestrebt werden.

Bevorzugt sind Dienkautschuke mit cis-Gehalten über 50 %, Vinyl-Gehalten von 5 - 50 % und Gelgehalten unter 5 %, welche mit dem erfindungsgemässen Verfahren herstellbar sind.

Die in einem einstufigen Prozeß mittels metallorganischer Katalysatoren hergestellten hergestellten erfindungsgemäßen Dienkautschuke, beispielsweise Polybutadien oder Polyisopren, dienen aufgrund ihres hohen cis-Gehalts bei gleichzeitig angehobenem vinyl-Gehalt als wertvolle Rohstoffe für die Gummi-Industrie sowie die Kunststoffmodifizierung. Insbesondere für die Anwendung auf dem Gebiet Reifen bestehen große Vorteile hinsichtlich Rollwiderstand aufgrund der niedrigen Werte für den Verlustfaktor tan δ bei 60°C sowie Elastizität in Lauffläche und Seitenwand.

## Beispiele

In den folgenden Beispielen 1 bis 12 wurden die Polymerisationen diskontinuierlich in einem Glasautoklaven durchgeführt. Sämtliche Arbeiten wurden unter Schutzgas durchgeführt.

## Beispiel 1

Nach dem Thermostatisieren des ausgeheizten und mehrfach mit Schutzgas gespülten Reaktors wurde dieser mit 99 ml Toluol, 10 g Butadien und 0,58 g Methylaluminoxan befüllt. Eine Lösung von $CpTiF_3$ in Toluol (1 x 10$^{-4}$ mol/l) wurde mittels einer gasdichten Spritze durch ein Septum in den Reaktor injiziert und die Polymerisation bei einer Temperatur von 30°C gestartet.

Nach einer Polymerisationsdauer von 30 Minuten wurde das Butadien abgelassen und der Ansatz mit Ethanol gequenscht. Zur Ausfällung wurde die toluolische Lösung in Ethanol eingetropft, in dem sich Vulkanox KB als Stabilisator befand, der Niederschlag abfiltriert und getrocknet. Die Aktivität betrug 54 kg BR/molTi*h*$C_{Butadien}$. Die Analyse der Mikrostruktur ergab 74 % 1,4-cis, 23 % 1,2-vinyl und 3 % 1,4-trans.

**Beispiel 2**

Es wurde wie in Beispiel 1 gearbeitet, jedoch wurde MeCpTiF$_3$ eingesetzt statt CpTiF$_3$. Die Aktivität betrug 80 kg BR/molTi*h*C$_{Butadien}$. Die Analyse der Mikrostruktur ergab 78 % 1,4-cis, 21 % 1,2-vinyl und 1 % 1,4-trans.

**Beispiel 3**

Es wurde wie in Beispiel 1 gearbeitet, jedoch wurde Cp*TiF$_3$ (5 x 10$^{-4}$ mol/l) eingesetzt statt CPTiF$_3$. Die Aktivität betrug 40 kg BR/molTi*h*C$_{Butadien}$. Die Analyse der Mikrostruktur ergab 76 % 1,4-cis, 22 % 1,2-vinyl und 2 % 1,4-trans.

**Beispiel 4**

Es wurde wie in Beispiel 1 gearbeitet, jedoch wurde Cp*$_2$TiF eingesetzt statt CpTiF$_3$. Die Aktivität betrug 6 kg BR/molTi*h*C$_{Butadien}$. Die Analyse der Mikrostruktur ergab 73 % 1,4-cis, 25 % 1,2-vinyl und 2 % 1,4-trans.

**Beispiel 5**

Nach dem Thermostatisieren des ausgeheizten und mehrfach mit Schutzgas gespülten Reaktors wurde dieser mit 1000 ml Hexan, 100 g Butadien und 100mmol Comethylaluminoxan befüllt. Eine Lösung von CpTiF$_3$ in Toluol (3 x 10$^{-5}$ mol/l) wurde mittels einer gasdichten Spritze durch ein Septum in den Reaktor injiziert und die Polymerisation bei einer Temperatur von 70°C gestartet.
Nach einer Polymerisationsdauer von 150 Minuten wurde das Butadien abgelassen und der Ansatz mit Ethanol gequenscht. Zur Ausfällung wurde die toluolische Lösung in Ethanol eingetropft, in dem sich Vulkanox KB als Stabilisator befand, der Niederschlag abfiltriert und getrocknet. Die Aktivität betrug 365 kg BR/molTi*h*C$_{Butadien}$. Die Analyse der Mikrostruktur ergab 78 % 1,4-cis, 20 % 1,2-vinyl und 2 % 1,4-trans.

**Beispiel 6**

Es wurde wie in Beispiel 1 gearbeitet, jedoch wurden 49 ml Toluol und 50 ml Isopren eingesetzt statt Butadien. Die Katalysatorkonzentration betrug 5 x 10$^{-4}$ mol/l, die Konzentration des Methylaluminoxans betrug 0,15 mol/l und die Polymerisationsdauer 240 Minuten. Die Aktivität betrug 840 g PI/molTi*h*Ci$_{Isopren}$.

**Beispiel 7**

Es wurde wie in Beispiel 6 gearbeitet, jedoch wurde MeCpTiF$_3$ eingesetzt statt CpTiF$_3$. Die Aktivität betrug 250 g PI/molTi*h*C$_{Isopren}$.

**Beispiel 8**

Es wurde wie in Beispiel 6 gearbeitet, jedoch wurde Cp*TiF$_3$ eingesetzt statt CpTiF$_3$. Die Aktivität betrug 29 g PI/molTi*h*C$_{Isopren}$.

**Beispiel 9** (Vergleich)

Es wurde wie in Beispiel 1 gearbeitet, jedoch wurde CpTiCi$_3$ eingesetzt statt CpTiF$_3$. Die Aktivität betrug 45 kg BR/molTi*h*C$_{Butadien}$.

**Beispiel 10** (Vergleich)

Es wurde wie in Beispiel 1 gearbeitet, jedoch wurde Cp*TiCl$_3$ eingesetzt statt CpTiF$_3$. Die Aktivität betrug 10 kg BR/molTi*h*C$_{Butadien}$.

**Beispiel 11** (Vergleich)

Es wurde wie in Beispiel 6 gearbeitet, jedoch wurde CpTiCl$_3$ eingesetzt statt CpTiF$_3$. Die Aktivität betrug 28 g PI/molTi*h*C$_{Isopren}$.

**Beispiel 12** (Vergleich)

Es wurde wie in Beispiel 6 gearbeitet, jedoch wurde Cp*TiCl$_3$ eingesetzt statt CpTiF$_3$. Die Aktivität betrug 8 g PI/molTi*h*C$_{Isopren}$.

**Beispiel 13**

Es wurden etwa 5 g des auf einem SiO$_2$/MAO-Precursor geträgerten Metallocens der Struktur CpTiF$_3$ in die Polymerisation eingesetzt, wobei diese Menge ca. 0,15 mmol des Metallocens enthielt. Die Reaktion wurde in einem stehenden gerührten Glasautoklaven, in den das polymerisationsaktive Material zuvor unter Stickstoffatmosphäre eingebracht wurde, bei 60°C durch Aufgabe eines Butadienpartialdruckes von 2 bar gestartet. Zur Verbesserung der Rührbarkeit bei der geringen Menge an Startmaterial kann der Katalysator beispielsweise auch mit einem Silica vorvermengt bzw. "gestreckt" werden. Der Beginn der Reaktion wurde durch einen leichten Temperaturanstieg (etwa 3°C) innerhalb des Reaktors angezeigt, weiterhin durch eine sichtbare Zunahme der Gesamtmenge des gerührten Feststoffes. Nach drei Stunden wurde der Versuch beendet, und das Reaktionsprodukt konnte über den Bodenablaßhahn entnommen werden. Die Aktivität betrug 183 kg BR/mol Ti * h.
Der Gelgehalt wurde anschließend vom Produkt unter Berücksichtigung des heterogenen Trägers bestimmt. Der Gelgehalt betrug 0,8 %.

**Beispiel 14** (Vergleich)

Es wurde wie in Beispiel 13 gearbeitet, jedoch wurde CpTiCl$_3$ eingesetzt statt CpTiF$_3$. Die Aktivität betrug 37 kg BR/mol Ti * h. Der Gelgehalt betrug 1,5 %.

**Beispiele 15**

Es wurden sechs Kautschukmischungen mit den in Tabelle 1 angegebenen Zusammensetzungen hergestellt, wobei jeweils die Gewichtsanteile der Komponenten in den Mischungen angegeben sind. Die Mischungen 3 und 6 sind erfindungsgemäße Mischungen, die Mischungen 1, 2, 4 und 5 sind Vergleichsmischungen. Die Mischungen 1-3 entsprechen gängigen Laufflächenmischungen, die Mischungen 4-6 entsprechen gängigen Seitenwandmischungen.

Tabelle 1

| Kautschukmischung | M1 | M2 | M3 | M4 | M4 | M6 |
|---|---|---|---|---|---|---|
| Bestandteile | Laufflächenmischung | | | Seitenwandmischung | | |
| NR (TSR 5 D. 700) | 80 | 80 | 80 | 60 | 60 | 60 |
| Buna ® CB 24 | 20 | | | 40 | | |
| Buna ® CB 10 | | 20 | | | 40 | |
| Metallocen BR | | | 20 | | | 40 |
| Ruß N 375 | 55 | 55 | 55 | | | |
| Ruß N 339 | | | | 55 | 55 | 55 |
| Renopal 450 | 3 | 3 | 3 | 6 | 6 | 6 |
| Stearinsäure | 2,5 | 2,5 | 2,5 | 2 | 2 | 2 |
| Antilux® 111 | 1 | 1 | 1 | 1 | 2 2 | 2 |
| Vulkanox ® 4010NA | 2,5 | 2,5 | 2,5 | 2,5 | 2,5 | 2,5 |
| Vulkanox ® HS/LG | 1,5 | 1,5 | 1,5 | 1,5 | 1,5 | 1,5 |
| ZnO aktiv | 5 | 5 | 5 | 5 | 5 | 5 |
| Vulkacit ® NZ/EG | 1,2 | 1,2 | 1,2 | 0,8 | 0,8 | 0,8 |
| Rhenogran ® IS60-G | 1,56 | 1,56 | 1,56 | 2,2 | 2,2 | 2,2 |

Bei NR handelt es sich um einen handelsüblichen Naturkautschuk. Bei dem Einsatzstoff Buna® CB 24 handelt es sich um ein kommerzielles Polybutadien der BAYER AG, das mit einem Neodym-Katalysator hergestellt wurde. Bei dem Einsatzstoff Buna® CB 10 handelt es sich um ein kommerzielles Polybutadien der BAYER AG, das mit einem Cobalt-Katalysator hergestellt wurde. Beide Polymere zeichnen sich durch einen hohen cis-Gehalt von mehr als 94 % aus. Das Metallocen-BR wurde erfindungsgemäß mit Hilfe des Katalysatorsystems $CpTiCl_3$ und Methylaluminoxan hergestellt. Die Mikrostruktur dieses Polymers beträgt 74 % 1,4-cis, 2 % 1,4-trans und 20 % 1,2-vinyl. Die Ruße N 375 und N 339 sind z. B. über die Fa. Cabot erhältlich. Vulkanox® und Vulkacit® sind Produkte der BAYER AG, während Antilux® und Rhenogran® Produkte der Rhein Chemie Rheinau GmbH sind.

**Patentansprüche**

1. Verfahren zur Herstellung von Dienkautschuken mit einem Vinylgehalt im Bereich von 5 bis 50 % und einem cis-Anteil von über 50 % durch Polymerisation von monomeren Dienverbindungen in Lösung, Suspension oder in der Gasphase **dadurch gekennzeichnet, dass** in Gegenwart eines Katalysatorsystems gemäß der allgemeinen Formel (1)

$$R_nMX_m \qquad\qquad (1),$$

worin M ein Metall ist,
R gleich oder verschieden ist, verbrückt oder unverbrückt vorliegen kann und einen ein- oder mehrkernigen Kohlenwasserstoffrest, welcher mit dem Zentralatom M koordiniert ist, bedeutet,
X gleich oder verschieden ist und mindestens ein Fluoratom sowie ein Wasserstoffrest, $C_1$- bis $C_{10}$-Alkyl, $C_6$- bis $C_{15}$-Aryl oder OR' oder OC(O)R' bedeutet, wobei R' für $C_1$- bis $C_{10}$-Alkyl, $C_6$- bis $C_{15}$-Aryl, Alkylaryl, Fluor, Fluoralkyl oder Fluoraryl mit jeweils 1 bis 10 C-Atomen im Alkylrest und 6 bis 20 C-Atomen im Arylrest steht,
n 1 oder 2 ist,
m 1,2 oder 3 bedeutet,
wobei n+m 3 oder 4 ist,
sowie eines Cokatalysators durchgeführt wird,
wobei die Verbindung der Formel 1 gegebenenfalls auf einen anorganischen oder organischen Träger aufgebracht und heterogenisiert eingesetzt wird.

2. Verfahren nach Anspruch 1, **dadurch gekennzeichnet, dass** als Diene Butadien, Isopren, Pentadien und 2,3-Dimethylbutadien eingesetzt werden, wobei die genannten Diene sowohl einzeln als auch im Gemisch untereinander eingesetzt werden können, so dass entweder Homopolymerisate oder Copolymerisate der genannten Diene entstehen.

3. Verfahren nach Anspruch 1, **dadurch gekennzeichnet, dass** als Dien Butadien eingesetzt wird.

4. Verfahren nach einem der Ansprüche 1-3, **dadurch gekennzeichnet, dass** das Verfahren in Gegenwart eines inerten, organischen Lösungsmittels durchgeführt wird.

5. Verfahren nach einem der Ansprüche 1-4, **dadurch gekennzeichnet, dass** als Co-Katalysator Methylaluminoxan oder butyl-modifiziertes Methylaluminoxan eingesetzt wird.

6. Verfahren nach einem der Ansprüche 1-5, **dadurch gekennzeichnet, dass** alle X gleich Fluor sind.

7. Verfahren nach einem der Ansprüche 1-6, **dadurch gekennzeichnet, dass** R gleich $Me_2cp$, $Me_3Cp$ oder $Me_5cp$ ist.

8. Verfahren nach einem der Ansprüche 1-6, **dadurch gekennzeichnet, dass** die Katalysatorkomponente aus mindestens einer der Verbindungen aus der Gruppe $CpTiF_3$, $MeCpTiF_3$, $Me_5CpTiF_3$, $(Me_5Cp)_2TiF$, $IndTiF_3$, $IndTiClF_2$, $IndTiCl_2F$, $MeIndTiF_3$, $MeIndTiClF_2$ oder $MeIndTiCl_2F$ besteht.

**Claims**

1. Process for the production of diene rubbers with a vinyl content ranging from 5 to 50% and a cis content of over 50% by the polymerization of monomeric diene compounds in solution, suspension or the vapour phase, **charac-**

**terized in that** is carried out in the presence of a catalyst system of general formula (1):

$$R_nMX_m \qquad (1),$$

wherein M is a metal,
the radicals R are identical or different, can be in a bridged or unbridged form and are a mononuclear or polynuclear hydrocarbon radical coordinated with the central atom M,
the radicals X are identical or different and are at least one fluorine atom and a hydrogen radical, $C_1$- to $C_{10}$-alkyl, $C_6$- to $C_{15}$-aryl, OR' or OC(O)R', R' being $C_1$- to $C_{10}$-alkyl, $C_6$- to $C_{15}$-aryl, alkylaryl, fluorine, fluoroalkyl or fluoroaryl each having 1 to 10 C atoms in the alkyl moiety and 6 to 20 C atoms in the aryl moiety,
n is 1 or 2, and
m is 1, 2 or 3,
n + m being 3 or 4,
and in the presence of a co-catalyst,
the compound of formula 1 optionally being applied to an inorganic or organic support and being used in heterogeneous form.

2. Process according to claim 1, **characterized in that** the dienes used are butadiene, isoprene, pentadiene and 2,3-dimethylbutadiene, it being possible for said dienes to be used either individually or in a mixture with one another to form either homopolymers or copolymers of said dienes.

3. Process according to claim 1, **characterized in that** the diene used is butadiene.

4. Process according to one of claims 1 - 3, **characterized in that** the process is carried out in the presence of an inert organic solvent.

5. Process according to one of claims 1 - 4, **characterized in that** the co-catalyst used is methylaluminoxane or butyl-modified methylaluminoxane.

6. Process according to one of claims 1 - 5, **characterized in that** all the radicals X are fluorine.

7. Process according to one of claims 1 - 6, **characterized in that** R is $Me_2cp$, $Me_3cp$ or $Me_5cp$.

8. Process according to one of claims 1 - 6, **characterized in that** the catalyst component consists of at least one compound from the group comprising $CpTiF_3$, $MeCpTiF_3$, $Me_5CpTiF_3$, $(Me_5Cp)_2TiF$, $IndTiF_3$, $IndTiClF_2$, $IndTiCl_2F$, $MeIndTiF_3$, $MeIndTiClF_2$ and $MeIndTiCl_2F$.

**Revendications**

1. Procédé de préparation de caoutchoucs diènes avec une teneur en vinyle dans la plage de 5 à 50% et une quantité de cis de plus de 50%, par polymérisation de composés diènes monomères en solution, en suspension ou en phase gazeuse, **caractérisé en ce qu'**on l'effectue en présence d'un système catalytique selon la formule générale (1)

$$R_nMX_m \qquad (1),$$

dans laquelle M est un métal,
R est identique ou différent, peut être dans une forme pontée ou non pontée et est un radical hydrocarboné mononucléaire ou polynucléaire qui est coordiné avec l'atome centrai M,
X est semblable ou différent est au moins un atome de fluor ainsi qu'un radical hydrogène, un radial alkyle en $C_1$ à $C_{10}$, aryle en $C_6$ à $C_{15}$ ou OR' ou OC(O)R', où R' est un radical alkyle en $C_1$ à $C_{10}$, aryle en $C_6$ à $C_{15}$, alkylaryle, fluor, fluoroalkyle ou fluoroaryle avec à chaque fois 1 à 10 atomes de carbone dans le radical alkyle et 6 à 20 atomes de carbone dans le radical aryle,
n vaut 1 ou 2,

m vaut 1, 2 ou 3,

n + m étant égal à 3 ou 4,

ainsi qu'un co-catalyseur,

le composé de formule 1 étant éventuellement porté sur un support minéral ou organique et étant utilisé de manière hétérogène.

2. Procédé selon la revendication 1, **caractérisé en ce qu'**on utilise comme diène, le butadiène, l'isoprène, le pentadiène et le 2,3-diméthylbutadiène, lesdits diènes pouvant être utilisés seuls ou en mélange de manière à obtenir des homopolymères ou des copolymères desdits diènes.

3. Procédé selon la revendication 1, **caractérisé en ce qu'**on utilise le butadiène comme diène.

4. Procédé selon l'une des revendications 1 à 3, **caractérisé en ce qu'**on effectue le procédé en présence d'un solvant organique inerte.

5. Procédé selon l'une des revendications 1 à 4, **caractérisé en ce qu'**on ajoute comme co-catalyseur le méthylaluminoxane ou le méthylaluminoxane modifié par le butyle.

6. Procédé selon l'une des revendications 1 à 5, **caractérisé en ce que** tous les X sont le fluor.

7. Procédé selon l'une des revendications 1 à 6, **caractérisé en ce que** R est $Me_2Cp$, $Me_3Cp$ ou MeCp.

8. Procédé selon l'une des revendications 1 à 6, **caractérisé en ce que** les composants de catalyseur sont choisis parmi au moins un des composés du groupe constitué par $CpTiF_3$, $MeCpTiF_3$, $Me_5CpTiF_3$, $(Me_5Cp)_2TiF$, $IndTiF_3$, $IndTiClF_2$, $IndTiCl_2F$, $MeIndTiF_3$, $MeIndTiClF_2$ ou $MeIndTiCl_2F$.